# EUROPEAN PATENT APPLICATION

(11) **EP 1 039 748 A2**
(43) Date of publication of application: **27.09.2000**
(21) Application number: 00105566.4
(22) Date of filing: 16.03.2000
(51) Int. Cl.: H04N 5/64

(54) **Television receiver**

(30) Priority: 26.03.1999 JP 8485899
(71) Applicant: AIWA CO., LTD., Taito-ku, Tokyo 110-0008 (JP)
(72) Inventor: Saito, Tatsuo, c/o AIWA CO., LTD., Tokyo 110-0008 (JP); Mizoguchi, Akio, c/o AIWA CO., LTD., Tokyo 110-0008 (JP)
(74) Representative: MÜLLER & HOFFMANN Patentanwälte

(57) **Abstract**

Sounds of the lower audio frequencies can be reproduced efficiently and excellently. A cabinet (102) may house therein subwoofers (104L, 104R), each of which is made of Kelton-type speaker, at its left and right. Ducts (104d) of the subwoofers (104L, 104R) may be protruded from second air chambers (104c) to the outside, and ports (104e) which are tip end portions of the ducts may be provided at the front of the cabinet (102). Sounds of the lower audio frequencies from the subwoofers may be radiated from the ports (104e) to the outside. Therefore, standing waves can be prevented from being generated within the cabinet (102) due to acoustic waves, thereby avoiding a tone quality from being deteriorated. Also, since speakers for reproducing sounds of the middle and high audio frequencies disposed at the front of the cabinet (102) and the ports (104e) of the subwoofers may be flush with each other, amplification factors of audio signals by which the subwoofers may be driven need not be increased in order to balance sounds of the lower audio frequencies and sounds of the middle and high audio frequencies.

## Description

### BACKGROUND OF THE INVENTION

### Field of the Invention:

The present invention relates generally to a television receiver having a so-called Kelton-type speaker housed therein as a subwoofer. More particularly, this invention relates to a television receiver in which a Kelton-type speaker is housed in a speaker cabinet as a subwoofer whose port is provided at the front of the speaker surface to thereby make it possible to reproduce sounds of the lower audio frequencies efficiently and satisfactorily.

### Description of the Related Art:

Ordinary television receivers have exhaust ports provided in their cabinets and are therefore unable to reproduce sounds of the sufficiently lower audio frequencies. To overcome this shortcoming, there has been heretofore proposed a television receiver housing a subwoofer within its cabinet to become able to reproduce sounds of the lower audio frequencies regardless of the shape of its cabinet.

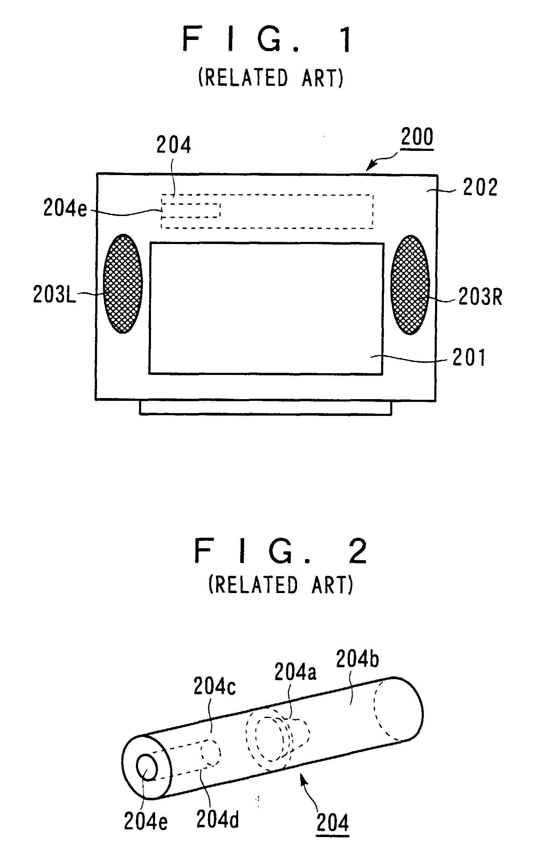

FIG. 1 of the accompanying drawings is a front view showing an example of a television receiver having a subwoofer housed within a cabinet according to the related art. A television receiver, generally depicted by reference numeral 200, may comprise a screen (panel face of a cathode-ray tube) 201 attached to the front of a cabinet 202 and speakers 203L and 203R disposed at the left and right of the screen 201 in the front of the cabinet 202. The speakers 203L and 203R are able to reproduce sounds of the middle and high audio frequencies. These speakers 203L and 203R may be driven in response to left-channel and right-channel audio signals, respectively.

Also, as shown in FIG. 1, the television receiver 200 may include a subwoofer 204 capable of reproducing sounds of the lower audio frequencies housed in the upper side of the cabinet 202. This subwoofer 204 is what might be called a Kelton-type speaker as shown in FIG. 2. Specifically, as shown in FIG. 2, the subwoofer 204 may comprise a speaker unit 204a, a first air chamber 204b for hermetically closing the rear of the speaker unit 204a, a second air chamber 204c provided at the front of the speaker unit 204a, a duct 204d and a port (opening portion) 204e communicated with the tip end portion of the duct 204d. According to the above-mentioned structure of the subwoofer 204, acoustic waves generated within the second air chamber 204c are radiated to the outside of the subwoofer 204 through the duct 204d from the port 204e. This subwoofer 204 may be driven in response to a monaural signal.

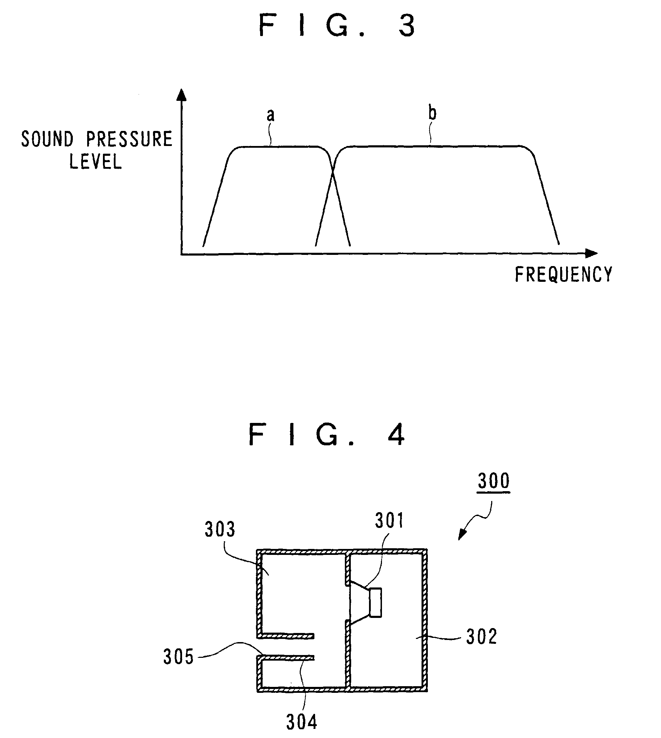

FIG. 3 is a characteristic graph graphing measured results of an outputted sound pressure frequency characteristic *a* of the subwoofer 204 and an outputted sound pressure frequency characteristic *b* of the speakers 203L, 203R.

The aforementioned Kelton-type speaker will be described below more in detail with reference to FIG. 4. FIG. 4 is a cross-sectional view illustrating the fundamental structure of the Kelton-type speaker.

The Kelton-type speaker has hitherto been used as a speaker having a band-pass filter characteristic to be able to reproduce sounds of the lower audio frequencies. A kelton-type speaker, generally depicted by reference numeral 300 in FIG. 4, may comprise a speaker unit 301, a first air chamber 302 for hermetically closing the rear of the speaker unit 301, a second air chamber 303 provided at the front of the speaker unit 301, a duct 304 and a port (opening portion) 305 communicated with the duct 304. According to the above-mentioned structure of the Kelton-type speaker 300, acoustic waves (traveling vibration by which sound energy is transmitted in air) generated within this second air chamber 303 are radiated to the outside of the speaker 300 through the duct 304 from the port 305.

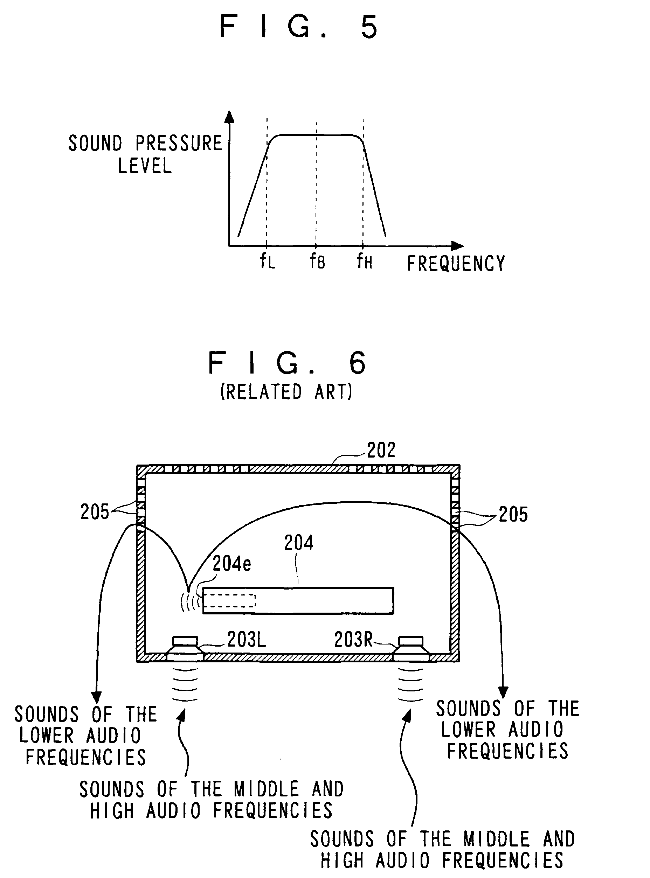

FIG. 5 is a characteristic graph graphing outputted sound pressure frequency characteristics of the aforementioned Kelton-type speaker. As shown in FIG. 5, outputted sound pressure frequency characteristics of acoustic waves radiated from the port 305 may become band-pass filter characteristics. The reason that the outputted sound pressure frequencies of acoustic waves become the band-pass filter characteristics is that three resonance frequencies fL, fB, fH exist in the Kelton-type speaker.

The resonance frequency fL may represent a series resonance frequency mainly comprising an elasticity presented by air existing within the first air chamber 302, an effective mass of the diaphragm of the speaker unit 301 and an elasticity of the diaphragm support and an equivalent mass of air existing within the duct 304. This series resonance frequency fL may give a low-pass limit of a frequency band. Also, the resonance frequency fH may represent a series resonance frequency mainly comprising an elasticity presented by air existing within the first air chamber 302, an effective mass of the diaphragm of the speaker unit 301 and an elasticity of the diaphragm support and an elasticity presented by air existing within the second air chamber 303. This series resonance frequency fH may give a high-pass limit of a frequency band. Also, the resonance frequency fB may represent a parallel resonance frequency comprising an elasticity presented by air existing within the first air chamber 302 and an equivalent mass of air existing within the duct 304. This resonance frequency may become a resonance frequency of a resonator from an acoustics standpoint.

According to the related-aft television receiver 200 shown in FIG. 1, since the Kelton-type speaker is housed within the cabinet 202 as the subwoofer 204, this television receiver 200 may become able to reproduce sounds of the lowest audio frequencies regardless of the shape of the cabinet 202.

However, since this television receiver 200 may house the whole of the subwoofer 204 within the cabinet 202, acoustic waves radiated from the port 204e are variously reflected in the inside of the cabinet 202 to cause standing waves to be generated, thereby resulting in a tone quality being deteriorated. Moreover, due to acoustic waves generated from the port 204e, there are unavoidably generated vibrations (noises) in the inside of the cabinet 202.

Also, the speakers 203L, 203R capable of reproducing sounds of the middle and high audio frequencies are disposed on the left and right front of the cabinet 202 and sounds of the middle and high audio frequencies are emanated from these speakers 203L, 203R. On the other hand, since sounds of the lower audio frequencies emanated from the subwoofer 204 are radiated to the outside of the cabinet 202 from through-holes 205 defined at the rear portion of the cabinet 202, sounds of the lower audio frequencies are radiated from the speakers 203L, 203R at their positions behind the positions at which sounds of the middle and high audio frequencies are radiated. Therefore, in order to balance sounds of the lower audio frequencies and sounds of the middle and high audio frequencies at the listening position ahead of the screen 201, an amplification factor of a monaural signal by which the subwoofer 204 may be driven should be increased.

### SUMMARY OF THE INVENTION

It is an object of the present invention to provide a television receiver which becomes able to reproduce sounds of the lower audio frequencies efficiently and satisfactorily.

According to an aspect of the present invention, there is provided a television receiver including a cabinet in which so-called Kelton-type speakers are housed at the left and right as subwoofers. Ports of the left and right subwoofers are provided at the left and right front of the cabinet. The left and right subwoofers are driven in response to stereo signals or a monaural signal, for example.

According to another aspect of the present invention, there is provided a television receiver including a cabinet in which a single so-called Kelton-type speaker is housed as a subwoofer. A port of such subwoofer is provided at the front of the cabinet.

According to the present invention, sounds of the lower audio frequencies are radiated from the ports which are respectively provided at the front of the cabinet. As a consequence, acoustic waves radiated from the ports can be prevented from variously reflecting in the inside of the cabinet. Thus, standing waves can be prevented from being generated, thereby avoiding a tone quality from being deteriorated.

Also, since the speakers for reproducing sounds of the middle and high audio frequencies provided at the front of the cabinet, for example, and the ports of the subwoofers are flush with each other, the amplification factors of audio signals by which the subwoofers are driven need not be increased in order to balance sounds of the lower audio frequencies and sounds of the middle and high audio frequencies. Moreover, since the ports of the left and fight subwoofers are provided at the front of the cabinet, dead spaces produced within the cabinet by a cathode-ray tube can be utilized effectively. Therefore, the cabinet need not be physically enlarged in order to dispose the left and right subwoofers within the cabinet.

### BRIEF DESCRIPTION OF THE DRAWINGS

FIG. 1 is a front view of an example of a television receiver according to the related art;
FIG. 2 is a perspective view showing a structure of a subwoofer (Kelton-type speaker) housed within the television receiver according to the related art in a partly cross-sectional fashion;
FIG. 3 is a characteristic graph graphing outputted sound pressure frequency characteristics of speakers for reproducing sounds of the middle and high audio frequencies and those of a subwoofer;
FIG. 4 is a cross-sectional view showing a fundamental structure of a Kelton-type speaker;
FIG. 5 is a characteristic graph graphing outputted sound pressure frequency characteristics of the Kelton-type speaker;

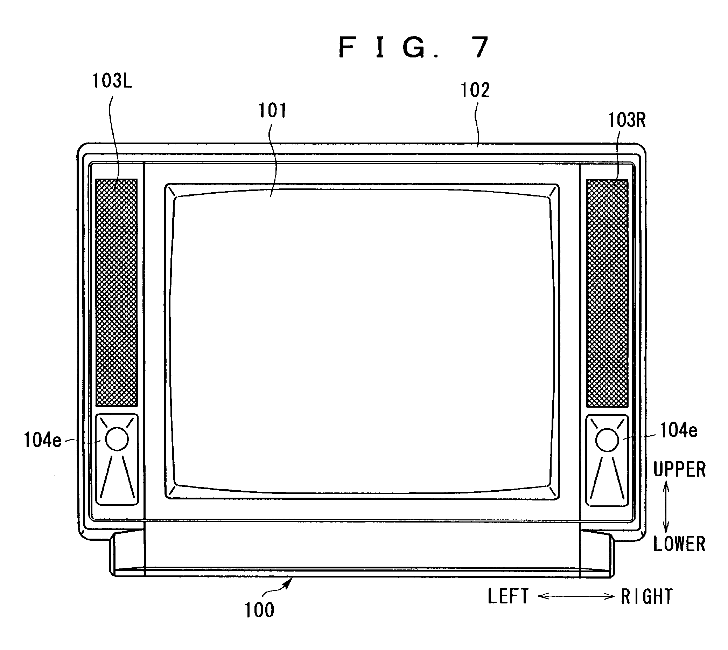

FIG. 6 is a diagram used to explain acoustic waves (sounds of lower audio frequencies) from the subwoofer in the television receiver according to the related art;
FIG. 7 is a front view of a television receiver according to an embodiment of the present invention; and
FIG. 8 is a cross-sectional view of a main portion of the television receiver according to the embodiment of the present invention.

### DESCRIPTION OF THE PREFERRED EMBODIMENT

A television receiver according to an embodiment of the present invention will hereinafter be described with reference to the drawings.

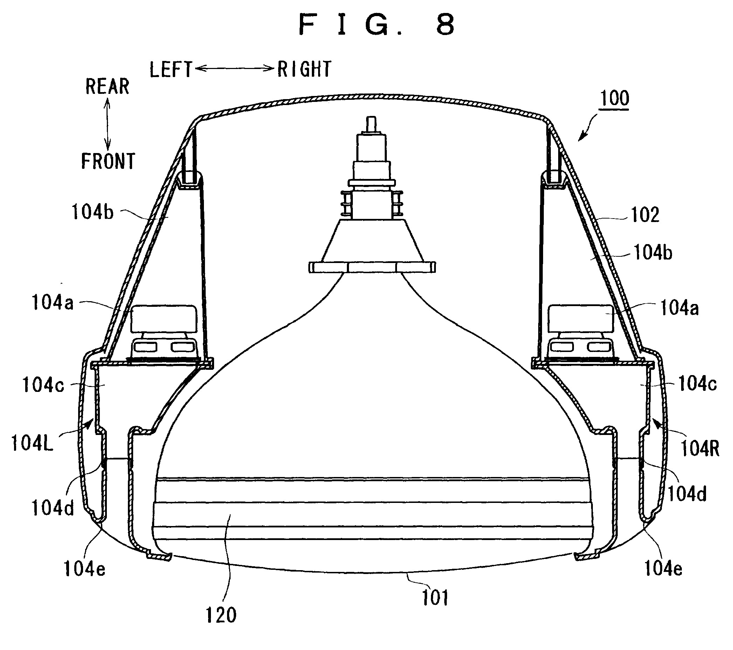

FIG. 7 is a front view showing a television receiver 100 according to an embodiment of the present invention. FIG. 8 is a cross-sectional view showing a main portion of the television receiver 100 according to the embodiment of the present invention.

As shown in FIG. 7, the television receiver 100 may comprise a screen (panel face of a cathode-ray tube 120) 101, a cabinet 102 and speakers 103L, 103R capable of reproducing sounds of the middle and high audio frequencies disposed ahead of the cabinet 102 at the left and right of the screen 101. These speakers 103L and 103R may be driven by two amplifiers (not shown) in response to stereo signals.

Also, as shown in FIG. 8, a first subwoofer 104L may be housed in the left of the cabinet 102, and a second subwoofer 104R may be housed in the right of the cabinet 102. These subwoofers 104L, 104R might be Kelton-type speakers, respectively. More specifically, each of the subwoofers 104L, 104R may comprise a speaker unit 104a, a first air chamber 104b for hermetically closing the rear of the speaker unit 104a, a second air chamber 104c provided at the front of the speaker unit 104a, a duct 104d and a port (opening portion) 104e communicated with this duct 104d. According to the aforementioned arrangement of the subwoofers 104L, 104R, acoustic waves generated in the second air chamber 104c are radiated to the outside of the television receiver 100 through the duct 104d from the port 104c.

In this case, the subwoofers 104L, 104R may be disposed in the dead spaces which are produced within the cabinet 102 when the cathode-ray tube 120 is assembled into the television receiver 100. Consequently, the wall surface of one portion of the first air chamber 104b and the second air chamber 104c may be curved along the cabinet 102 or the cathode-ray tube 120. Also, the duct 104d may be protruded from the second air chamber 104c to the outside, and the port 104e which is the tip end portion of the duct 104d may be provided at the front of the cabinet 102.

Specifically, as shown in FIG. 7, the port 104e of the subwoofer 104L may be provided on the lower portion of the speaker 103L at the left front side of the cabinet 102. On the other hand, the port 104e of the subwoofer 104R may be provided on the lower portion of the speaker 103R at the right front side of the cabinet 102. The port 104e may be curved in order to prevent whistling sounds from being generated as shown in FIG. 8.

The subwoofers 104L, 104R may be driven by two amplifiers (not shown), for example, in response to stereo signals or may be driven by a single amplifier (not shown) in response to a monaural signal.

As set forth above, according to the embodiment of the present invention, sounds of the lower audio frequencies from the left and right subwoofers 104L, 104R may be radiated from the ports 104e, 104e provided on the left and right front of the cabinet 102, respectively. Therefore, acoustic waves radiated from the port 104e may be prevented from being variously reflected on the inside of the cabinet 102. Thus, standing waves can be prevented from being generated, thereby avoiding a tone quality from being deteriorated. Moreover, vibrations (noises) can be prevented from being generated in the inside of the cabinet 102 due to acoustic waves radiated from the port 104e.

Also, since the speakers 103L, 1031R capable of reproducing sounds of middle and high audio frequencies provided on the front left and right of the cabinet 102 and the ports 104e, 104e of the left and right subwoofers 104L, 104R may be flush with each other, the amplification factors of the audio signals by which the subwoofers 104L, 104R may be driven need not be increased in order to balance sounds of lower audio frequencies and sounds of middle and high audio frequencies at the listening position ahead of the screen 101. Moreover, since the ports 104e, 104e of the left and right subwoofers 104L, 104R are disposed at the front of the cabinet 102 so that the dead spaces produced within the cabinet 102 when the cathode-ray tube 120 is assembled into the television receiver 100 can be effectively utilized as the areas in which the left and right subwoofers 104L, 104R are disposed, the cabinet 102 need not physically be enlarged in order to dispose the left and right subwoofers 104L, 104R within the cabinet 102.

While the subwoofers 104L, 104R have been disposed on the left and right of the cabinet 102 as described above, the present invention is not limited to the above-mentioned embodiment, and the following variant also may be possible. That is, a single subwoofer (Kelton-type speaker) may be disposed within the cabinet 102, e.g. the left or the right of the cabinet 102 and its port 104e may be provided at the front of the cabinet 102. Also in this case, there can be achieved action and effects similar to those of the above-mentioned embodiment. In this case, the single subwoofer may be driven in response to a monaural signal.

According to the present invention, since the Kelton-type speaker may be housed within the cabinet as the subwoofer and the port of the subwoofer may be provided at the front of the cabinet, it is possible to reproduce sounds of the lower audio frequencies efficiently and excellently.

Having described a preferred embodiment of the invention with reference to the accompanying drawings, it is to be understood that the invention is not limited to that precise embodiment and that various changes and modifications could be effected therein by one skilled in the art without departing from the spirit or scope of the invention as defined in the appended claims.

## Claims

1. A television receiver characterized in that a first subwoofer is housed within the left of a cabinet, a second subwoofer is housed within the right of said cabinet, said first and second subwoofers are arranged such that the rears of respective speaker units are hermetically closed by first air chambers, second air chambers are provided at the front of said speaker units and acoustic waves generated in said second air chambers are radiated to the outside through ducts and ports communicated with said ducts, said port of said first subwoofer is provided at the left front of said cabinet and said port of said second subwoofer is provided at the right front of said cabinet.

2. A television receiver as claimed in claim 1, wherein said first and second subwoofers are driven by two amplifiers in response to stereo signals.

3. A television receiver as claimed in claim 1, wherein said first and second subwoofers are driven by a single amplifier in response to a monaural signal.

4. A television receiver characterized in that a cabinet houses a single subwoofer, said subwoofer is arranged such that the rear of a speaker unit is hermetically closed by a first air chamber, a second air chamber is provided at the front of said speaker unit and acoustic waves generated in said second air chamber are radiated through a duct and a port communicated with said duct and said port of said subwoofer is provided at the front of said cabinet.
